# EUROPEAN PATENT SPECIFICATION

(11) **EP 3 967 971 B1**
(45) Date of publication and mention of the grant of the patent: **13.08.2025**
(21) Application number: 20306007.4
(22) Date of filing: 10.09.2020
(51) Int. Cl.: G01N 29/06, G01N 29/22, G01N 29/265, G01N 29/26, G01N 29/28, G01B 17/02

(54) **NON-DESTRUCTIVE TESTING APPARATUS AND METHOD**
VORRICHTUNG UND VERFAHREN ZUR ZERSTÖRUNGSFREIEN PRÜFUNG
APPAREIL ET PROCÉDÉ D'ESSAIS NON DESTRUCTIFS

(43) Date of publication of application: 16.03.2022
(73) Proprietor: Nexans, 92400 Courbevoie (FR)
(72) Inventor: SKARNES, Widar, 1786 Halden (NO); JOHANSEN, Ben Kristian, 1779 Halden (NO)
(74) Representative: Acapo Onsagers AS

(56) References cited:
- EP-A1- 3 239 706
- EP-A2- 0 045 056
- WO-A1-01/96853
- JP-A- H09 304 358
- US-A- 3 921 440
- US-A1- 2014 076 053
- US-A1- 2014 345 384
- US-A1- 2019 079 031
- US-A1- 2019 195 829

## Description

The invention regards an ultrasonic testing apparatus and a method for ultrasonic imaging of power cable lead sheath.

In the manufacture of cables with lead sheathing, special attention is to be paid by the operating personnel to the quality of the lead sheath applied to the cable. It is an important aspect of cable manufacturing to inspect the lead sheath for imperfections, contaminations etc., and in particular it is important to monitor and inspect areas where lead sheath sections are spliced.

Traditionally such inspections are performed using imaging of the lead sheath or lead sheath splice by means of a high energy Gamma-Ray or X-ray Source. The imaging resulting from such methods gives not satisfactory images of the lead sheath for interpretation of the quality of the manufactured lead sheath. It is not possible to get an image of the complete circumference of the lead sheath/lead sheath splice due to high reflectivity of the cable core. The prior art techniques are very time consuming and the radiation sources are potentially harmful for the operator, which gives high demands to the safety procedures and equipment in order to reduce risk for radiation injury for the operators.

It is thus a need for improved inspection and testing methods.

Ultrasonic testing (UT) is a family of non-destructive testing techniques based on the propagation of ultrasonic waves in the object or material tested. In most common UT applications, very short ultrasonic pulse-waves with center frequencies ranging from 0.1-15 MHz, and occasionally up to 50 MHz, are transmitted into materials to detect internal flaws or to characterize materials. A common example is ultrasonic thickness measurement, which tests the thickness of the test object, for example, to monitor pipework corrosion.

Ultrasonic testing is often performed on steel and other metals and alloys, though it can also be used on concrete, wood and composites, albeit with less resolution. It is used in many industries including steel and aluminum construction, metallurgy, manufacturing, aerospace, automotive and other transportation sectors.

EP0045056 describes a monitoring device for monitoring lead thickness for use in a process for the production of lead cables. Measuring transducers distributed around the circumference are provided for the wall thickness of the lead jacket, for the cable length generated and the amount of lead associated therewith, which are connected by an evaluation unit to an image signal generator, the image signal generator being connected to a color image transmitter arranged at the work place and controlling it.

The device of EP0045056 thus focuses on converting the signals from several sensors into a color image representation, which is provided directly on the lead press during the entire lead cable production process.

GB2232250 describes an apparatus and method for detecting defects in longitudinal welds. The welds join the edges of metal strips that form sheath for cables. The defects are identified and located by continuously introducing ultrasonic vibrations into the welded region. The vibrations pass through the cable, with the transmitter on one side and the receiver on the opposite side.

Document US 3 921 440 A discloses an ultrasonic pipe testing system.

Document US 2019/079031 A1 discloses an X-ray inspection system for pipes.

Document EP 3 239 706 A1 discloses an apparatus and method for inspecting an object using ultrasonic waves in the field of material testing.

Document US 2014/076053 A1 discloses a profiling tool for determining material thickness for inspection sites having complex topography.

Document US 2014/345384 A1 discloses a generator retaining ring scanning robot.

Document JP H09 304358 A discloses a defect detecting method for lead sheath pipe for electric wire.

Document WO 01/96853 A1 discloses a method of measuring topography in an interface and use of the method for a high-voltage cable.

Document US 2019/195829 A1 discloses a device and method for performing ultrasound scanning of a substantially cylindrical object.

An object of the invention is to provide an ultrasonic testing apparatus and method for ultrasonic imaging of power cable lead sheath that with confidence can verify the quality of the lead sheath or lead sheath splice and without posing health and safety risks for the operators.

It is a further object of the invention to provide an ultrasonic testing apparatus and method for ultrasonic imaging of power cable lead sheath that gives significantly more information about the quality of the lead sheath or lead sheath splice than prior art. This gives more confidence in determining the quality of said material.

The object of the invention is achieved by means of the features of the patent claims.

A power cable lead sheath inspection assembly is provided according to claim 1.

A method for ultrasonic imaging of power cable lead sheath is provided according to claim 6.

The ultrasonic probe comprises an ultrasonic transducer for generating ultrasonic waves with a desired frequency in order to provide signals that can be processed to give information related to the quality of the lead sheath such as thickness, thickness uniformity, defects, imperfections, contaminations etc. Conventional ultrasonic transducers for (non-destructive testing) commonly consist of either a single active element that both generates and receives high frequency sound waves, or two paired elements, one for transmitting and one for receiving. Phased array probes, on the other hand, typically consist of a transducer assembly with from 16 to as many as 256 small individual elements that can each be pulsed separately. These may be arranged in a strip (linear array), a ring (annular array), a circular matrix (circular array), or a more complex shape. Unlike conventional flaw detectors, phased array systems can sweep a sound beam through a range of refracted angles or along a linear path, or dynamically focus at a number of different depths, thus increasing both flexibility and capability in inspection setups. Phased-array systems can display ultrasonic data as sectorial or linear images allowing an inspector to see instantly a complete zone of the component and thus interpret data more easily.

The Total Focusing Method (TFM) and/or Adaptive Ultrasonic Imaging Method (ATFM) imaging techniques can be applied to ultrasonic data. The data can for example be recorded from a FMC (Full Matric Capture) acquisition to produce an image in a region of the component. The FMC presents the advantage of maximizing the information available from a given array composed of N elements by sending ultrasonic energy everywhere in the component; this way potential defects can be seen from multiple directions. The FMC acquisition consists in firing each element of the array in turn and recording the information reflected/diffracted in the component on all the elements.

In one embodiment, the ultrasonic probe comprises a rubber membrane and a closed water chamber for transmitting the ultrasound waves from the transducer to the lead sheath and to receive the reflected waves. The reflected waves are registered, and the signals generated in the ultrasonic probe are recorded and processed to provide signals representing the characteristics of the lead sheath.

The ultrasonic probe is configured to emit waves with a wavelength adapted to lead. A suitable frequency of the sound waves is for example in the area 5-15 MHz, and is in one embodiment 10MHz.

In one embodiment, the probe guiding device comprises a guiding control unit configured for controlling the movement of the ultrasonic probe to follow the inspection path. The guiding control unit can control to probe to measure the area of interest, such as the complete circumference of the lead sheath and a predetermined length. To achieve this, the probe guiding apparatus will move the probe according to the individual needs. The measurements can be done with a resolution set by the operator and/or adapted to the specific use, ie. the guiding control unit will control the movement accordingly. A resolution of 1mm is for example achieved by moving the ultrasonic probe 1mm between each operation of the probe.

The ultrasonic testing apparatus comprises an ultrasonic control unit connected to the ultrasonic probe for controlling the ultrasound waves emitted from the ultrasonic probe. The ultrasonic control unit may be in communication with the probe guiding device for coordination of the movement of the ultrasonic probe and the emittance of ultrasound waves.

The invention will now be described in more detail by means of example and by reference to the accompanying figures.

Figure 1a and 1b illustrates an ultrasonic testing apparatus configured to inspect a splice in a cable lead sheath.

Figure 2a and 2b illustrates an ultrasonic testing apparatus configured to inspect a section of a cable lead sheath.

In the figures an ultrasonic testing apparatus 10 for inspection of power cable lead sheath is illustrated in different configurations. Same elements have same reference numbers in the figures. The ultrasonic testing apparatus 10 comprise an ultrasonic probe 11 for emitting ultrasound waves towards the power cable lead sheath 12 and recording ultrasound waves reflected from the power cable lead sheath 12, a probe guiding device 13,18 configured to move the ultrasonic probe along an inspection path, and a processing device 14 connected to the ultrasonic probe for receiving signals from the ultrasonic probe and processing the signals to provide an image representing the lead sheath along the inspection path. The signals are transferred through the signal cable 16 from the ultrasonic probe 11 to the processing device 14.

The ultrasonic probe 11 is a configured to measure the lead sheath and comprises an ultrasonic transducer configured to emit waves in the ultrasound range. To transmit the waves to the lead sheath and receive the reflected waves, the ultrasonic probe 11 comprises a rubber membrane closing a chamber filled with water, gel or other suitable substance. The ultrasonic probe is in one embodiment configured to emit sound waves with a frequency of 10MHz.

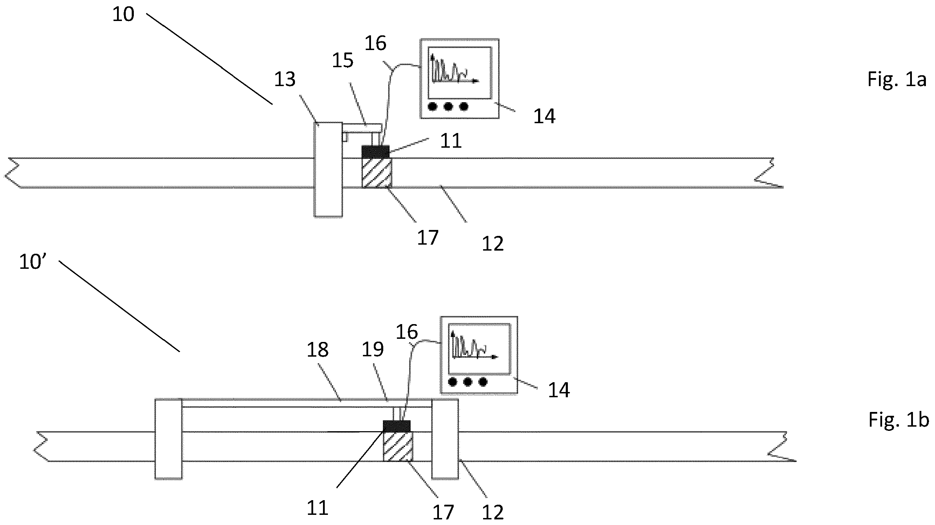

In the example of figure 1a the probe guiding device 13 is a rotary probe guiding device which is configured to move the ultrasonic probe along the circumference of the lead sheath 12. The rotary probe guiding device comprises a fixing frame 15 which fixes the ultrasonic probe in the desired location around the lead sheath 12. The fixing frame is rotatable arranged in order to allow the ultrasonic probe to be rotated around the lead sheath.

The rotary probe guiding device comprises or is connected to a motor or other driving means that causes the movement of the fixing frame and the ultrasonic probe.

In this example the ultrasonic testing apparatus 10 is arranged to inspect a splice 17. The ultrasonic probe 11 is then rotated around the complete circumference while it is operated, thus scanning the circumference and providing information regarding the thickness and shape of the splice over the circumference. The signals from the ultrasonic probe 11 are transmitted to the processing device 14 which processes the signals to provide an image of the cross section of the lead sheath splice.

In the example of figure 1b, the ultrasonic testing apparatus 10' also is configured to inspect a splice 17, but in this embodiment, the probe guiding device 18 comprises an elongated fixing frame 19 which is arranged in parallel to the power cable during operation. The ultrasonic probe 11 can be moved along the fixing frame 19, thus scanning the length of the lead sheath. The ultrasonic probe will then be moved the desired length in order to inspect the area of interest.

The embodiments of figure 1a and 1b may be combined to scan the lead sheath in both longitudinal and circumferential direction to map a larger area of the lead sheath.

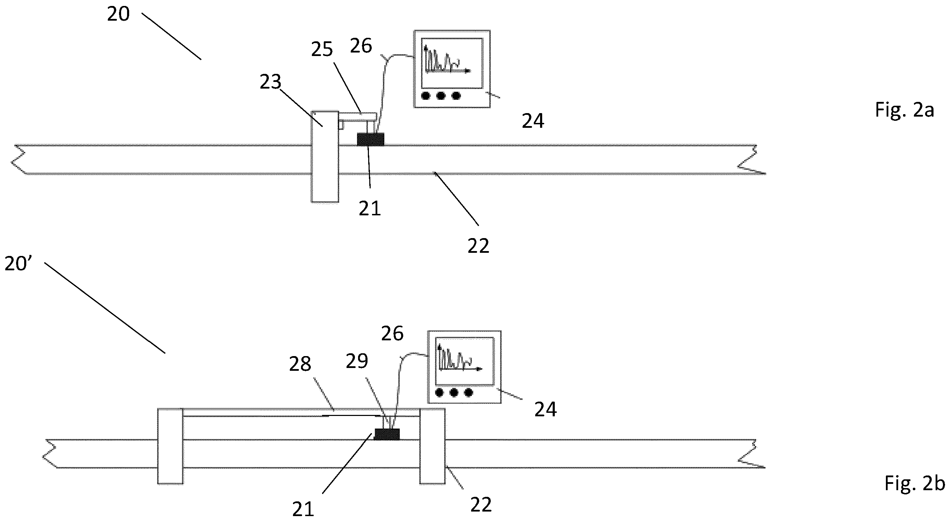

Figures 2a and 2b illustrates similar embodiments of an ultrasonic testing apparatus as shown in figure 1a and 1b, but the ultrasonic testing apparatus is in these embodiments arranged to inspect a section of the lead sheath without splice.

The ultrasonic testing apparatus 20, 20' comprise an ultrasonic probe 21 for emitting ultrasound waves towards the power cable lead sheath 22 and recording ultrasound waves reflected from the power cable lead sheath 22, a probe guiding device 23,28 configured to move the ultrasonic probe 21 along an inspection path, and a processing device 24 connected to the ultrasonic probe for receiving signals from the ultrasonic probe and processing the signals to provide an image representing the lead sheath along the inspection path. The signals are transferred through the signal cable 26 from the ultrasonic probe 21 to the processing device 24.

## Claims

1. A power cable lead sheath inspection assembly, comprising a power cable having a lead sheath (12) and an ultrasonic testing apparatus (10) for inspection of power cable lead sheath (12), comprising
- an ultrasonic probe (11) for emitting ultrasound waves towards the power cable lead sheath (12) and recording ultrasound waves reflected from the power cable lead sheath (12),
- a probe guiding device (13) configured to move the ultrasonic probe (11) along an inspection path,
- a processing device (14) connected to the ultrasonic probe (11) for receiving signals from the ultrasonic probe (11) and processing the signals, **characterized in that** the processing device (14) provides an image representing the lead sheath (12) along the inspection path, and **in that** the power cable lead sheath inspection assembly further comprises:
- an ultrasonic control unit connected to the ultrasonic probe (11) for controlling the ultrasound waves emitted from the ultrasonic probe (11), where the ultrasonic control unit is in communication with the probe guiding device (13) for coordination of the movement of the ultrasonic probe (11) and the emittance of ultrasound waves.

2. Power cable lead sheath inspection assembly according to claim 1, where the ultrasonic probe (11) comprises a rubber membrane and a closed water chamber for transmitting the ultrasound waves to the lead sheath (12).

3. Power cable lead sheath inspection assembly according to one of the previous claims, where the ultrasonic probe (11) is configured to emit waves with a frequency in the area 5-15 MHz.

4. Power cable lead sheath inspection assembly according to one of the previous claims, where the probe guiding device (13) comprises a control unit configured for controlling the movement of the ultrasonic probe (11) to follow the inspection path.

5. Power cable lead sheath inspection assembly according to one the previous claims, where the probe guiding device (13) is configured to move the ultrasonic probe (11) the complete circumference of the lead sheath (12) and a predetermined length.

6. Method for ultrasonic imaging of power cable lead sheath, comprising
- emitting ultrasound waves towards the power cable lead sheath,
- moving the ultrasonic probe along an inspection path,
- processing signals reflected from the power cable lead sheath, **characterized in that** the processing provides an image representing the lead sheath along the inspection path, and **in that** the method further comprises:
- controlling the ultrasound waves emitted from the ultrasonic probe,
- coordinating the movement of the ultrasonic probe and the emittance of ultrasound waves.

7. Method according to claim 6, where the ultrasonic waves are emitted with a frequency in the area 5-15 MHz.

8. Method according to claim 6 or 7, comprising controlling the movement of the ultrasonic probe to follow the inspection path.

9. Method according to one of claims 7-8, where the signals reflected from the power cable lead sheath are processed by using Phased Array Ultrasonic Testing (PAUT) or Adaptive Total focusing Method (ATFM) techniques.

## Patentansprüche

1. Vorrichtung zur Inspektion eines Bleimantels eines Stromkabels, umfassend ein Stromkabel mit einem Bleimantel (12) und eine Ultraschallprüfvorrichtung (10) zur Inspektion des Bleimantels (12) des Energiekabels, umfassend
- eine Ultraschallsonde (11) zum Aussenden von Ultraschallwellen in Richtung des Bleimantels (12) des Stromkabels und zum Aufzeichnen von vom Bleimantel (12) reflektierten Ultraschallwellen,
- eine Sondenführungsvorrichtung (13), die dazu eingerichtet ist, die Ultraschallsonde (11) entlang eines Inspektionspfades zu bewegen,
- eine Verarbeitungseinheit (14), die mit der Ultraschallsonde (11) verbunden ist, um Signale von der Ultraschallsonde (11) zu empfangen und zu verarbeiten,
**dadurch gekennzeichnet, dass** die Verarbeitungseinheit (14) ein Bild bereitstellt, das den Bleimantel (12) entlang des Inspektionspfades darstellt, und dass die Vorrichtung zur Inspektion eines Bleimantels eines Stromkabels weiterhin umfasst:
- eine Ultraschallsteuereinheit, die mit der Ultraschallsonde (11) verbunden ist, um die von der Ultraschallsonde (11) ausgesendeten Ultraschallwellen zu steuern, wobei die Ultraschallsteuereinheit mit der Sondenführungsvorrichtung (13) kommuniziert, um die Bewegung der Ultraschallsonde (11) und die Aussendung der Ultraschallwellen zu koordinieren.

2. Vorrichtung zur Inspektion eines Bleimantels eines Stromkabels nach Anspruch 1, wobei die Ultraschallsonde (11) eine Gummimembran und eine geschlossene Wasserkammer zur Übertragung der Ultraschallwellen auf den Bleimantel (12) umfasst.

3. Vorrichtung zur Inspektion eines Bleimantels eines Stromkabels nach einem der vorhergehenden Ansprüche, wobei die Ultraschallsonde (11) dazu eingerichtet ist, Wellen mit einer Frequenz im Bereich von 5 - 15 MHz auszusenden.

4. Vorrichtung zur Inspektion eines Bleimantels eines Stromkabels nach einem der vorhergehenden Ansprüche, wobei die Sondenführungsvorrichtung (13) eine Steuereinheit umfasst, die dazu eingerichtet ist, die Bewegung der Ultraschallsonde (11) zu steuern, um dem Inspektionspfad zu folgen.

5. Vorrichtung zur Inspektion eines Bleimantels eines Stromkabels nach einem der vorhergehenden Ansprüche, wobei die Sondenführungsvorrichtung (13) dazu eingerichtet ist, die Ultraschallsonde (11) über den gesamten Umfang des Bleimantels (12) und über eine vorbestimmte Länge zu bewegen.

6. Verfahren zur Ultraschallbildgebung eines Bleimantels eines Stromkabels, umfassend
- das Aussenden von Ultraschallwellen in Richtung des Bleimantels des Stromkabels,
- das Bewegen der Ultraschallsonde entlang eines Inspektionspfades,
- das Verarbeiten von vom Bleimantel des Stromkabels reflektierten Signalen,
**dadurch gekennzeichnet, dass** die Verarbeitung ein Bild bereitstellt, das den Bleimantel entlang des Inspektionspfades darstellt, und dass das Verfahren weiterhin umfasst:
- das Steuern der von der Ultraschallsonde ausgesendeten Ultraschallwellen,
- das Koordinieren der Bewegung der Ultraschallsonde und der Aussendung der Ultraschallwellen.

7. Verfahren nach Anspruch 6, wobei die Ultraschallwellen mit einer Frequenz im Bereich von 5 - 15 MHz ausgesendet werden.

8. Verfahren nach Anspruch 6 oder 7, umfassend das Steuern der Bewegung der Ultraschallsonde, um dem Inspektionspfad zu folgen.

9. Verfahren nach einem der Ansprüche 7-8, wobei die vom Bleimantel des Stromkabels reflektierten Signale unter Verwendung von Phased Array Ultrasonic Testing (PAUT) oder Adaptive Total Focusing Method (ATFM) verarbeitet werden.

## Revendications

1. Ensemble d'inspection de gaine de plomb de câble d'alimentation, comprenant un câble d'alimentation ayant une gaine de plomb (12) et un appareil de test à ultrasons (10) pour l'inspection de la gaine de plomb du câble d'alimentation (12), comprenant
- une sonde à ultrasons (11) pour émettre des ondes ultrasonores vers la gaine de plomb du câble d'alimentation (12) et enregistrer les ondes ultrasonores réfléchies par la gaine de plomb du câble d'alimentation (12),
- un dispositif de guidage de sonde (13) configuré pour déplacer la sonde à ultrasons (11) le long d'un trajet d'inspection,
- un dispositif de traitement (14) connecté à la sonde ultrasonore (11) pour recevoir les signaux de la sonde ultrasonore (11) et traiter les signaux, **caractérisé en ce que** le dispositif de traitement (14) fournit une image représentant la gaine de plomb (12) le long du trajet d'inspection, et **en ce que** l'ensemble d'inspection de la gaine de plomb du câble d'alimentation comprend également :
- une unité de commande ultrasonore connectée à la sonde ultrasonore (11) pour contrôler les ondes ultrasonores émises par la sonde ultrasonore (11), dans lequel l'unité de commande ultrasonore est en communication avec le dispositif de guidage de sonde (13) pour coordonner le mouvement de la sonde ultrasonore (11) et l'émission des ondes ultrasonores.

2. Ensemble d'inspection de gaine de plomb de câble d'alimentation selon la revendication 1, dans lequel la sonde à ultrasons (11) comprend une membrane en caoutchouc et une chambre à eau fermée pour transmettre les ondes ultrasonores à la gaine de plomb (12).

3. Ensemble d'inspection de gaine de plomb de câble d'alimentation selon l'une des revendications précédentes, dans lequel la sonde à ultrasons (11) est configurée pour émettre des ondes avec une fréquence dans la zone de 5 à 15 MHz.

4. Ensemble d'inspection de gaine de plomb de câble d'alimentation selon l'une des revendications précédentes, dans lequel le dispositif de guidage de sonde (13) comprend une unité de commande configurée pour commander le mouvement de la sonde à ultrasons (11) pour suivre le trajet d'inspection.

5. Ensemble d'inspection de gaine de plomb de câble d'alimentation selon l'une des revendications précédentes, dans lequel le dispositif de guidage de sonde (13) est configuré pour déplacer la sonde à ultrasons (11) sur toute la circonférence de la gaine de plomb (12) et sur une longueur prédéterminée.

6. Procédé d'imagerie ultrasonore de gaine de plomb d'un câble électrique, comprenant :
- émettre des ondes ultrasonores vers la gaine de plomb du câble électrique,
- déplacer la sonde ultrasonore le long d'un trajet d'inspection,
- traiter des signaux réfléchis par la gaine de plomb du câble d'alimentation, **caractérisé en ce que** le traitement fournit une image représentant la gaine de plomb le long du trajet d'inspection, et **en ce que** le procédé comprend en outre :
- contrôler les ondes ultrasonores émises par la sonde ultrasonore,
- coordonner le mouvement de la sonde ultrasonore et l'émission des ondes ultrasonores.

7. Procédé selon la revendication 6, dans lequel les ondes ultrasonores sont émises avec une fréquence dans la zone 5-15 MHz.

8. Procédé selon la revendication 6 ou 7, comprenant contrôler le mouvement de la sonde à ultrasons pour suivre le trajet d'inspection.

9. Procédé selon l'une des revendications 7 à 8, dans lequel les signaux réfléchis par la gaine de plomb du câble d'alimentation sont traités en utilisant des techniques de contrôle par ultrasons multiéléments (PAUT) ou de méthode de focalisation totale adaptative (ATFM).
